# EUROPÄISCHE PATENTSCHRIFT

(11) **EP 2 454 499 B1**
(45) Veröffentlichungstag und Bekanntmachung des Hinweises auf die Patenterteilung: **06.01.2016**
(21) Anmeldenummer: 10742710.6
(22) Anmeldetag: 03.07.2010
(51) Int. Cl.: F16C 33/66, F16N 39/06

(54) **LAGERANORDNUNG FÜR EIN MEDIENGESCHMIERTES LAGER MIT EINEM ROTATIONSABSCHEIDER**
BEARING ARRANGEMENT FOR A MEDIA-LUBRICATED BEARING HAVING A ROTARY SEPARATOR
ENSEMBLE PALIER POUR PALIER LUBRIFIÉ PAR UN FLUIDE, PRÉSENTANT UN SÉPARATEUR ROTATIF

(30) Priorität: 15.07.2009 DE 102009033130
(43) Veröffentlichungstag der Anmeldung: 23.05.2012
(73) Patentinhaber: Schaeffler Technologies AG & Co. KG, 91074 Herzogenaurach (DE)
(72) Erfinder: RUHL, Stefan, 91056 Erlangen (DE); FRIEDRICH, Hans, 91093 Hessdorf (DE); PACHNER, Sebastian, 96047 Bamberg (DE)
(86) Internationale Anmeldenummer: PCT/DE2010/000768
(87) Internationale Veröffentlichungsnummer: WO 2011/006470

(56) Entgegenhaltungen:
- JP-A- 59 129 552
- JP-A- 59 175 697

## Beschreibung

### Gebiet der Erfindung

Die Erfindung betrifft eine Lageranordnung nach dem Oberbegriff von Anspruch 1 für ein mediengeschmiertes Lager, insbesondere ein mediengeschmiertes Wälz- oder Gleitlager, sowie einem Rotationsabscheider nach Anspruch 9 für ein mediengeschmiertes Lager.

Aus der Praxis sind mediengeschmierte Lager, insbesondere mediengeschmierte Gleit- oder Wälzlager, bekannt, bei denen das Lager in dem Schmiermedium angeordnet ist und von dem Schmiermedium durchströmt ist. Insbesondere sind wassergeschmierte Wälzlager bekannt, die im Wasser angeordnet sind und bei denen Wasser einströmseitig in das Wälzlager eingeleitet wird. Das Schmiermedium, speziell das Wasser, transportiert Partikel, die nicht in das Lager gelangen sollen und die eine höhere Dichte als das Schmiermedium aufweisen.

Zum Entfernen der Partikel aus dem Schmiermedium ist bekannt, dem Lager einströmseitig einen Rotationsabscheider vorzuschalten. Der Rotationsabscheider erteilt dem im wesentlichen parallel zu der Drehachse des Lagers einströmenden Schmiermedium eine Bewegungskomponente in radialer Richtung, also in einer Richtung senkrecht zu der Drehachse des Lagers, so dass unter der Wirkung einer Zentrifugalkraft die Partikel von der Drehachse des Lagers weg beschleunigt werden und an dem Lager vorbeigeführt werden können, also insbesondere nicht in das Lager gelangen.

DE 10 2007 003 618 A1 beschreibt in Fig. 3 ein Ausführungsbeispiel, bei dem konzentrisch zu der Rotationsachse eines Statorgehäuses einer Turbine ein sich konisch verjüngendes tellerförmiges Element vorgeschaltet ist. Entlang der Rotationsachse einströmendes Schmiermedium wird in dem tellerförmigen Element in Drehung versetzt, so dass Partikel mit einer Dichte, die höher als die Dichte des Schmiermediums ist, entlang der Wandung des tellerförmigen Elementes von der Rotationsachse weggeführt werden. Mit der Rotationsachse fluchtend ist eine Einlassöffnung für einen Schmiermittelzuführungskanal, der über einen radialen, also zu der Rotationsachse senkrechten, und dann einen zu der Rotationsachse versetzten, parallelen Abschnitt zu zwei bezüglich der Rotationsachse versetzt angeordneten Lagern führt. Die Lageranordnung umfasst einen sich lang erstreckenden Zuführungskanal für das von den Partikeln befreite Schmiermedium.

JP 08135653 AA (Abstract) beschreibt eine Lageranordnung für ein Gleitlager mit einem einströmseitig vorgeschalteten Rotationsabscheider. Der Rotationsabscheider umfasst ein an der Welle befestigtes, von der Welle radial abstehendes Ablenkmittel, das das einströmende Schmiermittel gegen ein unter einem Winkel an einem Lagergehäuse angeordnetes Ablenkmittel lenkt, wobei das Ablenkmittel einen ersten Teilstrom des Strömungsmittels durch einen Filter in den Lagerspalt des Gleitlagers lenkt und einen zweiten Teilstrom des Strömungsmittels, in dem sich die Partikel befinden, zwischen dem Lager und der Lageraufnahme an dem Gleitlager vorbei lenkt. Der Filter ist an dem Lager befestigt und lässt eine Lücke zu dem Ablenkmittel, so dass Partikel den Filter passieren und an den Lagerspalt gelangen können.

JP 08338425 AA (Abstract) beschreibt eine Lageranordnung eines Gleitlagers mit einem einströmseitig vorgeschalteten Rotationsabscheider. Der Rotationsabscheider umfasst ein Ablenkmittel, das den parallel zu der Rotationsachse der Welle einströmenden Strom des Schmiermittels radial ablenkt, wobei das Ablenkmittel mit der Welle drehfest verbunden ist, wobei das Schmiermittel in eine an der Welle angeordnete Vorkammer gelangt, aus der heraus ein erster Teilstrom des Schmiermittels durch einen Filter in den Lagerspalt geführt und ein zweiter Teilstrom in dem sich die Partikel konzentrieren, an dem Gleitlager vorbei durch einen Ringspalt zwischen dem Gleitlager und einem Lagergehäuse gelenkt wird. Zur Ausbildung des Rotationsabscheiders sind dabei an der Welle und an dem Lagergehäuse jeweils bauliche Veränderungen vorzunehmen.

JP 2003042159 AA (Abstract) beschreibt eine Lageranordnung mit zwei Axiallagern, wobei zur Zuführung des Schmiermediums eine sich senkrecht zu der Drehachse einer Welle, also radial erstreckende Zuführleitung vorgesehen ist, die in eine sich radial erstreckende Bohrung in dem Korpus der Welle übergeht. Weiter wird das Schmiermedium entlang der Rotationsachse der Welle in zwei axialen Bohrungsabschnitten geführt, die in zwei radiale Bohrungsabschnitte übergehen, um dann wieder parallel zu der Rotationsachse zu den Axiallagern zu gelangen. Den Axiallagern vorgeschaltet ist eine Ausnehmung in der Welle, die als Abscheidkammer für Partikel ausgebildet ist.

US 3,500,959 A beschreibt eine Schleuderscheibe, die an einem Endabschnitt einer Welle angeordnet ist, wobei die Schleuderscheibe mit einer Lageraufnahme für die Welle einen Spalt lässt, so dass das Schmiermedium in den Spalt eintreten muss, um die Welle zu schmieren. Hierbei besteht der Nachteil, dass bei Rotation der Welle das Schmiermedium aus dem Spalt austritt, also entgegen der gewünschten Einströmrichtung gefördert wird. DE 202 13 002 U1 beschreibt eine Lageranordnung für eine Welle mit einer Lagerbuchse, an deren Mantelfläche Drallnuten vorgesehen sind.

JP 59 175697 AA (Abstract) beschreibt eine gattungsbildende Lageranordnung mit einem Lager und einem dem Lager einströmseitig vorgeschalteten Rotationsabscheider. Der Rotationsabscheider ist vom Lager beabstandet angeordnet, um eine Passage zwischen dem Lager und dem Rotationsabscheider auszubilden, deren Strömungsquerschnitt verengt wird.

### Aufgabe der Erfindung

Es ist die Aufgabe der Erfindung, eine Lageranordnung mit einem einfach, insbesondere auch nachträglich anzubringenden Rotationsabscheider anzugeben.

### Zusammenfassung der Erfindung

Diese Aufgabe wird erfindungsgemäß für die Lageranordnung nach Anspruch 1 mit einem Rotationsabscheider nach Anspruch 9 gelöst.

Weil der Rotationsabscheider als von dem Lager getrennt ausgebildete bauliche Einheit angeordnet ist, lässt sich ein Lager, insbesondere auch ein in Betriebsstellung befindliches Lager, nachträglich bei Bedarf mit dem Rotationsabscheider versehen. Der Rotationsabscheider lässt sich mit seinen äußeren Abmessungen an die Abmessungen der Lageraufnahe, in der das Lager angeordnet ist, anpassen, so dass hier ein konstruktiver Freiheitsgrad besteht. Es ist insbesondere nicht erforderlich, an der in dem Lager gelagerten Welle oder an der Lageraufnahme baulich Änderungen, insbesondere Bohrungen in der Lageraufnahme, die die Befestigung des Lagers in der Lageraufnahme beeinträchtigen können, vorzusehen, um den Rotationsabscheider auszubilden. Zusätzlich bietet sich die Möglichkeit, dass ein erster Rotationsabscheider und ein zweiter Rotationsabscheider vorgesehen ist, wobei der zweite Rotationsabscheider dem ersten Rotationsabscheider strömungsmäßig nachgeschaltet ist und der zweite Rotationsabscheider dem Lager strömungsmäßig vorgeschaltet ist, so dass sich die Wirkung beider Rotationsabscheider verstärkt.

Der mindestens eine Rotationsabscheider kann auf den drehenden Lagerring des Lagers beispielsweise mittels Presssitz befestigt werden, alternativ oder ergänzend hierzu kann vorgesehen sein, den Rotationsabscheider gegen den Lagerring mechanisch zu verspannen.

Vorzugsweise ist hinsichtlich der Ausbildung der Lageranordnung bzw. des Rotationsabscheiders vorgesehen, dass der Rotationsabscheider ein im wesentlichen kreisringförmiges Korpus umfasst, wobei in das Korpus des Rotationsabscheiders auf einfache Weise Bohrungen eingebracht werden können, um die Strömung des Schmiermittels in dem Rotationsabscheider zu leiten. Die Abmessungen des Rotationsabscheiders lassen sich leicht an die Gegebenheiten des Lagers anpassen; insbesondere ist es möglich, Großlager mit einem Lagerdurchmesser von bis zu einigen Metern ggf. auch nachträglich mit einem Rotationsabscheider zu versehen.

Vorzugsweise ist hinsichtlich der Ausbildung der Lageranordnung bzw. des Rotationsabscheiders vorgesehen, dass das Material des Korpus des Rotationsabscheiders ein Stahl, insbesondere ein korrosionsfester Stahl, ist. Der Rotationsabscheider besteht damit aus einem insoweit in Bezug auf das Korpus des Lagers vergleichbaren Material, dass Kriechströme aufgrund einer Kontaktelektrizität an der Grenzfläche des Lagers zu dem Korpus des Rotationsabscheiders vermeidbar sind. Anstelle eines korrosionsfesten Stahls könnte auch ein beschichteter Stahl, insbesondere ein beschichteter Wälzlagerstahl, verwendet werden, der aufgrund der Beschichtung gegenüber Meerwasser korrosionsfest ist. Es versteht sich, dass das Korpus des Rotationsabscheiders auch aus einem anderen Material, beispielsweise einem Kunststoff, bestehen kann, insbesondere bei Rotationsabscheidern für kleinbauende Lager.

Vorzugsweise ist hinsichtlich der Ausbildung der Lageranordnung bzw. des Rotationsabscheiders vorgesehen, dass ein Durchmesser eines Auslassbereiches des Rotationsabscheiders mit zunehmenden Abstand von dem Lager zunimmt. In dem Auslassbereich treten die Partikel mit einem Teilstrom des Schmiermittels aus dem Rotationsabscheider aus und werden von dem Lager weg geführt. Die Zunahme des Durchmessers des Auslassbereiches, der als konische Bohrung in dem Korpus des Rotationsabscheiders ausgebildet sein kann, mit zunehmenden Abstand zu dem Lager ermöglicht eine Beschleunigung der Teilströmung, die die Partikel von dem Lager weg transportiert, und somit ein verbessertes Entfernen der Partikel aus der Nähe des Lagers.

Vorzugsweise ist hinsichtlich der Ausbildung der Lageranordnung bzw. des Rotationsabscheiders vorgesehen, dass eine Einlassöffnung des Rotationsabscheiders zu einer Auslassöffnung des Rotationsabscheiders radial versetzt angeordnet ist. Dabei strömt das mit Partikeln belastete Schmiermedium auf der gleichen Seite des Rotationsabscheiders aus, auf der es in den Rotationsabscheider eingeströmt ist. Es lässt sich insbesondere vermeiden, den mit den Partikeln belasteten Teilstrom des Schmiermediums außen entlang des Lagers, beispielsweise in einer Nut zwischen der äußeren Mantelfläche des Lagerrings und der Lageraufnahme, zu führen.

Hinsichtlich der Ausbildung der Lageranordnung bzw. des Rotationsabscheiders ist vorgesehen, dass ein Einlassbereich des Rotationsabscheiders als sich im wesentlichen radial erstreckende Bohrung ausgebildet ist, wobei sich die im wesentlichen radial, also unter einem annähernd senkrechten Winkel zu der Rotationsachse des Lagers erstreckende Bohrung leicht anbringen lässt und das Auftreten besonders ausgeprägter Zentrifugalkräfte ermöglicht, die die Partikel von der Rotationsachse des Lagers weg beschleunigen. Es ist vorgesehen, dass die sich radial erstreckende Bohrung von der Drehachse weg konisch zuläuft.

Vorzugsweise ist hinsichtlich der Ausbildung der Lageranordnung bzw. des Rotationsabscheiders vorgesehen, dass ein Einlassbereich des Rotationsabscheiders als unter einem Winkel zu der Drehachse gerichtete Bohrung ausgebildet ist, so dass die Strecke, über die das Schmiermittel innerhalb des Rotationsabscheiders geführt wird, vergrößert wird. Besonders bevorzugt ist vorgesehen, dass die Bohrung von der Drehachse weg sich verjüngt, wodurch die Strömung des Schmiermediums in der Bohrung zusätzlich beschleunigt wird.

Weitere Vorteile und Merkmale der Erfindung ergeben sich aus den abhängigen Ansprüchen sowie aus der Beschreibung von bevorzugten Ausführungsbeispielen.

Die Erfindung wird im folgenden unter Bezugnahme auf die anliegenden Zeichnungen näher beschrieben und erläutert.

### Kurze Beschreibung der Zeichnungen

- Fig. 1: zeigt eine schematische Querschnittsansicht eines ersten Ausführungsbeispiels einer erfindungsgemäßen Lageranordnung mit einem ersten Ausführungsbeispiel eines erfindungsgemäßen Rotationsabscheiders, und
- Fig. 2: zeigt eine schematische Querschnittsansicht eines zweiten Ausführungsbeispiels einer erfindungsgemäßen Lageranordnung mit einem zweiten Ausführungsbeispiel eines erfindungsgemäßen Rotationsabscheiders.

### Detaillierte Beschreibung der Zeichnungen

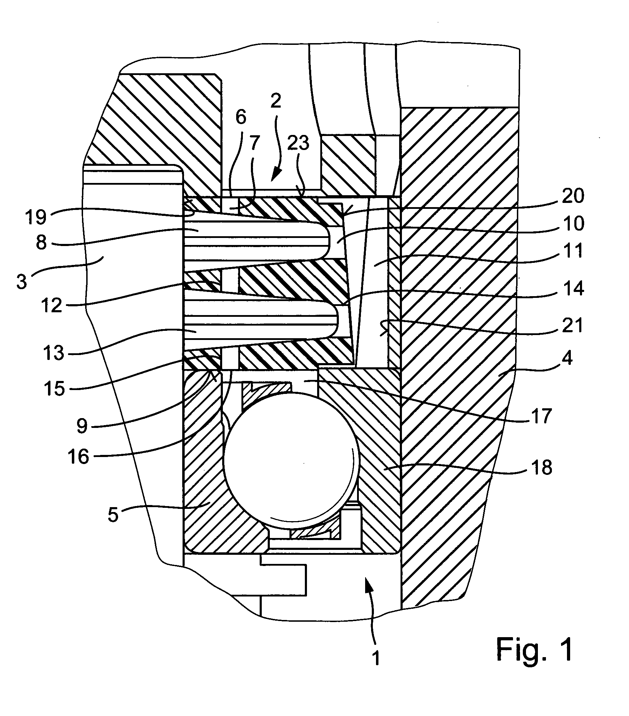

Fig. 1 zeigt eine Lageranordnung, die ein als Schrägkugellager ausgebildetes Lager 1 sowie einen dem Lager 1 einströmseitig vorgeschalteten Rotatiorisabscheider 2 umfasst, wobei der Rotationsabscheider 2 unmittelbar an dem Lager 1 angeordnet ist.

Das Lager 1 ist in Meerwasser angeordnet und von Meerwasser durchströmt, so dass Meerwasser als Schmiermedium des Lagers 1 vorgesehen ist. Das Lager 1 lagert eine nur ausschnittsweise erkennbare Welle 3 an einer Lageraufnahme 4. Hierzu ist ein erster Lagerring 5 als Innenring des Lagers 1 ausgestaltet und an der Welle 3 drehfest, beispielsweise mittels Presssitz, befestigt. Die Welle 3 ist um eine in der Darstellung von Fig. 1 links von dem Lager 1 vorgesehene Rotationsachse drehbar.

Der Rotationsabscheider 2 ist an der Welle 3 drehfest, beispielsweise mittels Pressitz, befestigt, und zusätzlich gegen das Lager 1, insbesondere gegen eine Stirnfläche 9 des ersten Lagerrings 5 mittels einer Kontermutter verspannt. Alternativ zu der Kontermutter könnte auch ein Federelement, beispielsweise eine Tellerfeder, den Rotationsabscheider 2 gegen das Lager 1 verspannen. Der Rotationsabscheider 2 umfasst eine Einlassöffnung 6, durch die das Wasser über einen ersten zylindrischen Zwischenabschnitt 7 in einen ersten Einlassbereich 8 gelangt. Aus dem ersten Einlassbereich 8 führt ein zweiter zylindrischer Zwischenabschnitt 10 zu einem Auslassbereich 11 und ein dritter zylindrischer Zwischenabschnitt 12 zu einem weiteren, zweiten Einlassbereich 13, aus dem ein vierter zylindrischer Zwischenabschnitt 14 zu dem Auslassbereich 11 und ein fünfter zylindrischer Zwischenabschnitt 15 zu einer Ausströmöffnung 16, die in den Lagerspalt 17, also den Zwischenraum zwischen dem ersten Lagerring 5 und einem weiteren, als Außenring ausgebildeten Lagerring 18 des Lagers 1 führt.

Der erste, dritte und fünfte zylindrische Zwischenabschnitt 7, 12 bzw. 15 sind zueinander fluchtend ausgerichtet und beispielsweise als gemeinsame Bohrung ausgestaltet, die das Korpus des Rotationsabscheiders 2 in seiner axialen Erstreckung durchsetzt.

Der erste Einlassbereich 8 sowie der zweite Einlassbereich 13 sind jeweils als bezogen auf die Rotationsachse der Welle 3 radial gerichtete Bohrungen in dem Korpus des Rotationsabscheiders 2 ausgebildet, wobei die jeweilige Bohrung von der Drehachse, nämlich der Rotationsachse der Welle 3, weg konisch zuläuft, bis die Bohrung an ihrem Endabschnitt in den zweiten zylindrischen Zwischenabschnitt 10 bzw. in den vierten zylindrischen Zwischenabschnitt 14 übergeht. Die Bohrungen für die Einlassbereiche 8, 13 sind ausgehend von der inneren Mantelfläche 19 des Korpus des Rotationsabscheiders 2 ausgeführt und um eine gedachte, auf der Drehachse der Welle 3 senkrechte Symmetrieachse drehsymmetrisch ausgebildet. Zu dieser Symmetrieachse fluchtend ist die jeweilige Zylinderachse des zweiten bzw. vierten zylindrischen Zwischenabschnittes 10 bzw. 14, die in einer Verlängerung und radial gerichteten Fortsetzung der konisch zulaufenden Bohrungen der beiden Einlassbereiche 8, 13 ausgeführt ist.

Der Auslassbereich 11 des Rotationsabscheiders 2 ist als konische Bohrung ausgebildet, deren Durchmesser mit zunehmenden Abstand in axialer Richtung von dem Lager 1, insbesondere von dem weiteren Lagerring 18, zunimmt. Dabei umfasst die Bohrung des Auslassbereiches 11 eine erste, konische Wandfläche 20 und eine zweite, zylindrische Wandfläche 21, wobei im Bereich der zweiten Wandfläche 21 der Rotationsabscheider 2 eine im wesentlichen konstante Dicke zu der angrenzenden Lageraufnahme 4 aufweist.

Mit Partikeln angereicherte Teilströme des Schmiermediums treten aus dem ersten Einlassbereich 8 bzw. aus dem zweiten Einlassbereich 13 über den zweiten bzw. vierten zylindrischen Zwischenabschnitt 10 bzw. 14 in den Auslassbereich 11 über und verlassen den Auslassbereich 11 über eine Auslassöffnung, die wie die Einlassöffnung 6 in einer Stirnfläche 23 des Korpus des Rotationsabscheiders 2 angeordnet ist, so dass die Einlassöffnung 6 und die Auslassöffnung bezogen auf die Drehachse parallel, aber radial voneinander beabstandet angeordnet sind.

Der Rotationsabscheider 2 weist ein im wesentlichen kreisringförmiges Korpus aus einem beschichteten Stahl, beispielsweise einem beschichteten Wälzlagerstahl, insbesondere 100Cr6, auf, der aufgrund der Beschichtung in Meerwasser korrosionsbeständig ist. Alternativ hierzu könnte das Korpus aus einem gegenüber Meerwasser auch ohne Beschichtung korrosionsbeständigem Stahl, beispielsweise einem Edelstahl, bestehen. An dem Korpus des Rotationsabscheiders 2 sind in Umfangsrichtung an vier Stellen mit jeweils gleichen Abstand Bohrungen zur Ausbildung der Einlassbereiche 8, 13 sowie des Auslassbereiches 11 und der zylindrischen Zwischenabschnitte 7, 10, 12, 14, 15 vorgesehen, so dass über insgesamt vier Einströmöffnungen 16 das von den Partikeln gereinigte Meerwasser in den Lagerspalt 17 eintreten kann.

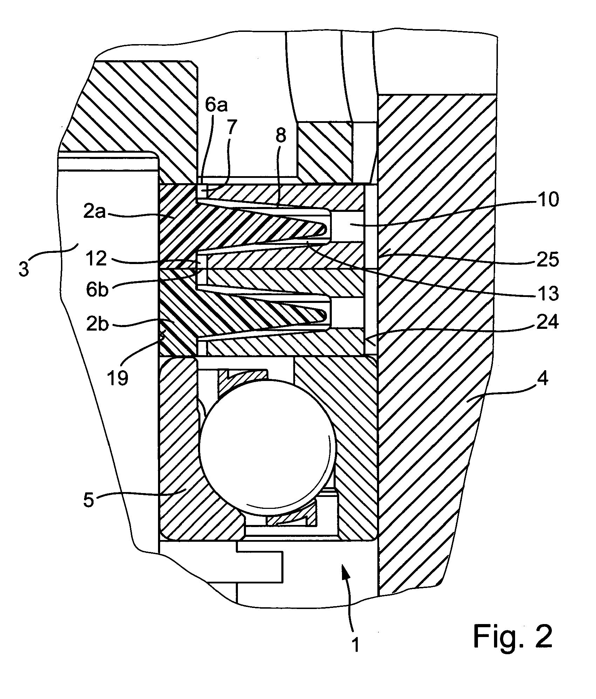

Bei der folgenden Beschreibung des in Fig. 2 dargestellten zweiten Ausführungsbeispiels bezeichnen jeweils gleiche Bezugszeichen gleiche oder in ihrer technischen Funktion vergleichbare Merkmale. Es sollen insbesondere die Unterschiede zu dem ersten Ausführungsbeispiel herausgestellt werden.

Fig. 2 zeigt eine Lageranordnung, die ein als Schrägkugellager ausgebildetes Lager 1 sowie einen Verbund von zwei dem Lager 1 jeweils einströmseitig vorgeschalteten Rotationsabscheidern, wobei ein erster Rotationsabscheider 2a und ein zweiter Rotationsabscheider 2b vorgesehen ist, wobei der zweite Rotationsabscheider 2b dem ersten Rotationsabscheider 2a strömungsmäßig nachgeschaltet ist und der zweite Rotationsabscheider 2b dem Lager 1 strömungsmäßig vorgeschaltet ist.

Mit Partikeln belastetes Meereswasser tritt über eine Einlassöffnung 6a und über einen ersten zylindrischen Zwischenabschnitt 7 in dem ersten Rotationsabscheider 2a in einen ersten Einlassbereich 8 und über einen zweiten Einlassbereich 13 entweder über einen zweiten zylindrischen Zwischenabschnitt 10 in den Auslassbereich 11 oder über einen dritten zylindrischen Zwischenabschnitt 12 in eine Einlassöffnung 6b des zweiten Rotationsabscheiders 2b.

Beide Rotationsabscheider 2a, 2b sind im wesentlichen gleichartig ausgestaltet, so dass im folgenden nur der erste Rotationsabscheider 2a näher beschrieben wird.

Der erste Rotationsabscheider 2a weist den ersten Einlassbereich 8 auf, der als unter einem Winkel von ca. 20 bis 30°, bezogen auf eine Senkrechte zu der Drehachse, gerichtete Bohrung ausgebildet ist. Der zweite Einlassbereich 13 ist ebenfalls unter einem Winkel von ca. -20° bis ca. -30°, bezogen auf eine Senkrechte zu der Drehachse, als Bohrung ausgestaltet. Die Bohrungen beider Einlassbereiche 8, 13 verjüngen sich weg von der Drehachse, so dass mit zunehmenden radialen Abstand zu der Drehachse der Flächenquerschnitt der Bohrung jeweils zunimmt.

Der zweite zylindrische Abschnitt 10 beider Rotationsabscheider 2a, 2b mündet in den beiden Rotationsabscheidern 2a, 2b gemeinsamen Auslassbereich 11, der als zylindrische Ausnehmung, speziell als Nut mit kreissegmentförmigen Querschnitt an einer äußeren Mantelfläche 24 des jeweiligen Rotationsabscheiders 2a, 2b ausgebildet ist. Die den Auslassbereich 11 bildende Nut wird durch einen Abschnitt einer Wandfläche 25 der Lageraufnahme 4 geschlossen.

Die beiden Einlassbereiche 8, 13 des Rotationsabscheiders 2a, 2b durchbrechen nicht die innere Mantelfläche 19 des Korpus des Rotationsabscheiders 2a, 2b, so dass in dem zweiten Ausführungsbeispiel eine entlang der gesamten inneren Mantelfläche 19 ausgebildete Anlage des Rotationsabscheiders 2a, 2b an die Welle 3 möglich ist.

Beide Rotationsabscheider 2a, 2b sind zueinander ausgerichtet aneinander befestigt und bilden eine kompakte Baueinheit, wobei der zweite Rotationsabscheider 2b an der Stirnfläche 9 des ersten Lagerrings 5 des Lagers 1 mittels Presssitz befestigt ist. Jeder der beiden Rotationsabscheider 2a, 2b ist an der Welle 1 mittels Presssitz festgelegt.

Es versteht sich, dass anstelle von zwei Rotationsabscheidern 2a, 2b ein einziger Rotationsabscheider vorgesehen sein kann, der einem der beiden Rotationsabscheider 2a oder 2b entspricht. Es versteht sich weiter, dass ein einziger Rotationsabscheider 2 vorgesehen sein kann, der der festen Verbindung der beiden Rotationsabscheider 2a, 2b entspricht und dann je zwei erste Einlassbereiche 8 und zwei zweite Einlassbereiche 13 aufweist.

Die Erfindung wurde vorstehend anhand eines ersten Ausführungsbeispiels erläutert und beschrieben, bei dem der Rotationsabscheider 2 einen ersten Einlassbereich 8 und einen zweiten Einlassbereich 13 aufwies, wobei beide Einlassbereiche 8, 13 als im wesentlichen konisch zulaufende Bohrungen ausgebildet waren. Es versteht sich, dass der Rotationsabscheider 2 des ersten Ausführungsbeispiels nur einen Einlassbereich aufweisen braucht.

Sofern der Rotationsabscheider zwei oder mehr Einlassbereiche aufweist, versteht es sich, dass einer der beiden Einlaufbereiche die Gestaltung der Einlassbereiche 8 bzw. 13 aus dem ersten Ausführungsbeispiel und der mindestens eine weitere der Einlassbereiche die Gestaltung der Einlassbereiche 8, 13 aus dem zweiten Ausführungsbeispiel aufweisen kann.

Es versteht sich weiter, dass der Einlassöffnung 6 bzw. 6a ein Filter, beispielsweise ein Filtersieb zum Entfernen von groben Partikeln, einströmseitig vorgeschaltet sein kann.

### Bezugszeichenliste

- 1: Lager
- 2: Rotationsabscheider
- 2a: erster Rotationsabscheider
- 2b: zweiter Rotationsabscheider
- 3: Welle
- 4: Lageraufnahme
- 5: erster Lagerring des Lagers 1
- 6: Einlassöffnung
- 6a: Einlassöffnung
- 7: erster zylindrischer Zwischenabschnitt
- 8: erster Einlassbereich
- 9: Stirnfläche des Lagerrings 5
- 10: zweiter zylindrischer Zwischenabschnitt
- 11: Auslassbereich
- 12: dritter zylindrischer Zwischenabschnitt
- 13: zweiter Einlassbereich
- 14: vierter zylindrischer Zwischenabschnitt
- 15: fünfter zylindrischer Zwischenabschnitt
- 16: Ausströmöffnung
- 17: Lagerspalt des Lagers 1
- 18: weiterer Lagerring des Lagers 1
- 19: innere Mantelfläche des Korpus des Rotationsabscheiders
- 20: erste Wandfläche des Auslassbereiches 11
- 21: zweite Wandfläche des Auslassbereiches 11
- 22: Auslassöffnung
- 23: Stirnfläche des Rotationsabscheiders 2
- 24: äußere Mantelfläche des Rotationsabscheiders 2a, 2b
- 25: Wandfläche der Lageraufnahme

## Patentansprüche

1. Lageranordnung für ein mediengeschmiertes Lager (1), insbesondere für ein mediengeschmiertes Wälzlager, umfassend
ein Lager (1), und
einen dem Lager (1) einströmseitig vorgeschalteten Rotationsabscheider (2) zum Entfernen von Partikeln aus dem Schmiermedium,
wobei der Rotationsabscheider (2) als von dem Lager (1) getrennt ausgebildete bauliche Einheit ausgebildet ist, die unmittelbar an dem Lager (1) angeordnet ist, und
wobei ein Einlassbereich (8, 13) des Rotationsabscheiders (2) als sich im wesentlichen radial erstreckende Bohrung ausgebildet ist, **dadurch gekennzeichnet,**
**dass** die sich radial erstreckende Bohrung von der Drehachse weg konisch zuläuft.

2. Lageranordnung nach Anspruch 1, **dadurch gekennzeichnet, dass** eine Einlassöffnung (6) des Rotationsabscheiders (2) zu einer Auslassöffnung des Rotationsabscheiders (2) radial versetzt angeordnet ist.

3. Lageranordnung nach Anspruch 1 oder 2, **dadurch gekennzeichnet, dass** ein Einlassbereich (8) des Rotationsabscheiders (2a, 2b) als unter einem Winkel zu der Drehachse gerichtete Bohrung ausgebildet ist.

4. Lageranordnung nach Anspruch 3, **dadurch gekennzeichnet, dass** die Bohrung von der Drehachse weg sich verjüngt.

5. Lageranordnung nach einem der Ansprüche 1 bis 4, **dadurch gekennzeichnet, dass** ein Durchmesser eines Auslassbereiches (11) des Rotationsabscheiders (2) mit zunehmenden Abstand von dem Lager (1) zunimmt.

6. Lageranordnung nach einem der Ansprüche 1 bis 5, **dadurch gekennzeichnet, dass** das Material des Korpus des Rotationsabscheiders (2; 2a, 2b) ein Stahl, insbesondere ein korrosionsfester Stahl, ist.

7. Lageranordnung nach einem der Ansprüche 1 bis 6, **dadurch gekennzeichnet, dass** der Rotationsabscheider (2; 2a, 2b) ein im wesentlichen kreisringförmiges Korpus umfasst.

8. Lageranordnung nach einem der Ansprüche 1 bis 7, **dadurch gekennzeichnet, dass** ein erster Rotationsabscheider (2a) und ein zweiter Rotationsabscheider (2b) vorgesehen ist, wobei der zweite Rotationsabscheider (2b) dem ersten Rotationsabscheider (2a) strömungsmäßig nachgeschaltet ist und der zweite Rotationsabscheider (2b) dem Lager (1) strömungsmäßig vorgeschaltet ist.

9. Rotationsabscheider für ein mediengeschmiertes Lager, insbesondere ein mediengeschmiertes Wälzlager, wobei der Rotationsabscheider als von dem Lager (1) baulich getrennte Einheit ausgebildet ist, **dadurch gekennzeichnet, dass** der Rotationsabscheider die Merkmale von einem der Ansprüche 1 bis 7 aufweist.

## Claims

1. Bearing arrangement for a medium-lubricated bearing (1), in particular for a medium-lubricated anti-friction bearing, comprising
a bearing (1), and
a rotary separator (2) which is connected upstream of the bearing (1) on the inflow side, for removing particles from the lubricating medium,
the rotary separator (2) being configured as a structural unit which is configured separately from the bearing (1) and is arranged directly on the bearing (1), and
an inlet region (8, 13) of the rotary separator (2) being configured as a substantially radially extending bore,
**characterized**
**in that** the radially extending bore tapers conically away from the rotational axis.

2. Bearing arrangement according to Claim 1, **characterized in that** an inlet opening (6) of the rotary separator (2) is arranged offset radially with respect to an outlet opening of the rotary separator (2).

3. Bearing arrangement according to Claim 1 or 2, **characterized in that** an inlet region (8) of the rotary separator (2a, 2b) is configured as a bore which is directed at an angle with respect to the rotational axis.

4. Bearing arrangement according to Claim 3, **characterized in that** the bore tapers away from the rotational axis.

5. Bearing arrangement according to one of Claims 1 to 4, **characterized in that** a diameter of an outlet region (11) of the rotary separator (2) increases as the spacing from the bearing (1) increases.

6. Bearing arrangement according to one of Claims 1 to 5, **characterized in that** the material of the body of the rotary separator (2; 2a, 2b) is a steel, in particular a stainless steel.

7. Bearing arrangement according to one of Claims 1 to 6, **characterized in that** the rotary separator (2; 2a, 2b) comprises a substantially circularly annular body.

8. Bearing arrangement according to one of Claims 1 to 7, **characterized in that** a first rotary separator (2a) and a second rotary separator (2b) are provided, the second rotary separator (2b) being connected downstream of the first rotary separator (2a) in flow terms, and the second rotary separator (2b) being connected upstream of the bearing (1) in flow terms.

9. Rotary separator for a medium-lubricated bearing, in particular a medium-lubricated anti-friction bearing, the rotary separator being configured as a unit which is structurally separate from the bearing (1), **characterized in that** the rotary separator has the features of one of Claims 1 to 7.

## Revendications

1. Agencement de palier pour un palier (1) lubrifié par un milieu, en particulier pour un palier à roulement lubrifié par un milieu, comprenant :
un palier (1) et
un séparateur rotatif (2) monté en amont du palier (1) du côté de l'afflux, pour éliminer les particules du milieu lubrifiant,
le séparateur rotatif (2) étant réalisé sous forme d'unité structurelle réalisée de manière séparée du palier (1), qui est disposée directement sur le palier (1), et
une région d'entrée (8, 13) du séparateur rotatif (2) étant réalisée sous forme d'alésage s'étendant essentiellement radialement,
**caractérisé en ce que**
l'alésage s'étendant radialement se prolonge sous forme conique en s'éloignant de l'axe de rotation.

2. Agencement de palier selon la revendication 1, **caractérisé en ce qu'**une ouverture d'entrée (6) du séparateur rotatif (2) est disposée de manière décalée radialement par rapport à une ouverture de sortie du séparateur rotatif (2).

3. Agencement de palier selon la revendication 1 ou 2, **caractérisé en ce qu'**une région d'entrée (8) du séparateur rotatif (2a, 2b) est réalisée sous forme d'alésage orienté suivant un certain angle par rapport à l'axe de rotation.

4. Agencement de palier selon la revendication 3, **caractérisé en ce que** l'alésage se rétrécit en s'éloignant de l'axe de rotation.

5. Agencement de palier selon l'une quelconque des revendications 1 à 4, **caractérisé en ce qu'**un diamètre d'une région de sortie (11) du séparateur rotatif (2) augmente avec l'augmentation de la distance au palier (1).

6. Agencement de palier selon l'une quelconque des revendications 1 à 5, **caractérisé en ce que** le matériau du corps du séparateur rotatif (2 ; 2a, 2b) est un acier, en particulier un acier résistant à la corrosion.

7. Agencement de palier selon l'une quelconque des revendications 1 à 6, **caractérisé en ce que** le séparateur rotatif (2 ; 2a, 2b) comprend un corps de forme essentiellement annulaire circulaire.

8. Agencement de palier selon l'une quelconque des revendications 1 à 7, **caractérisé en ce qu'**un premier séparateur rotatif (2a) et un deuxième séparateur rotatif (2b) sont prévus, le deuxième séparateur rotatif (2b) étant monté en aval du premier séparateur rotatif (2a) dans le sens de l'écoulement, et le deuxième séparateur rotatif (2b) étant monté en amont du palier (1) dans le sens de l'écoulement.

9. Séparateur rotatif pour un palier lubrifié par un milieu, en particulier un palier à roulement lubrifié par un milieu, le séparateur rotatif étant réalisé sous la forme d'une unité séparée structurellement du palier (1), **caractérisé en ce que** le séparateur rotatif présente les caractéristiques de l'une quelconque des revendications 1 à 7.
